Europäisches Patentamt

European Patent Office

Office européen des brevets

(19)

(11) Numéro de publication: **0 453 366 B1**

(12)

# FASCICULE DE BREVET EUROPEEN

(45) Date de publication de fascicule du brevet: **18.01.95**   (51) Int. Cl.⁶: **C09K 7/02**

(21) Numéro de dépôt: **91401026.9**

(22) Date de dépôt: **18.04.91**

(54) **Boue de forage au scléroglucane.**

(30) Priorité: **19.04.90 FR 9005021**

(43) Date de publication de la demande:
**23.10.91 Bulletin 91/43**

(45) Mention de la délivrance du brevet:
**18.01.95 Bulletin 95/03**

(84) Etats contractants désignés:
**DK FR GB IT NL**

(56) Documents cités:
| | |
|---|---|
| **EP-A- 0 259 939** | **FR-A- 2 570 754** |
| **GB-A- 1 591 313** | **GB-A- 2 153 834** |
| **US-A- 2 854 407** | **US-A- 3 909 421** |
| **US-A- 3 986 964** | |

(73) Titulaire: **ELF AOUITAINE
Tour Elf,
2, Place de la Coupole,
La Défense 6
F-92400 Courbevoie (FR)**

(72) Inventeur: **Vaussard, Alain
20, bld de l'Oussère
F-64000 Pau (FR)**
Inventeur: **Ladret, Alain
6 Lot de Chaillos-Rue Mandon
F-31800 Saint-Gaudens (FR)**
Inventeur: **Donche, Alain
Chemin Vignats
F-64110 Jurançon (FR)**

(74) Mandataire: **Boillot, Marc
ELF AOUITAINE
Division Propriété Industrielle
Tour Elf
F-92078 Paris la Défense Cédex 45 (FR)**

Rank Xerox (UK) Business Services
(3.10/3.09/3.3.3)

## Description

La présente invention concerne une boue de forage à l'eau composée d'un minimum de constituants dont un biopolymère connu obtenu par fermentation appelé scléroglucane, lequel contient en particulier les résidus cellulaires de l'organisme producteur.

La boue de forage est un mélange plus ou moins complexe basé le plus souvent sur une suspension colloïdale à base d'eau ou d'huile, utilisée pour le forage des puits. Cette boue, injectée dans le train de tiges de forage, circule par un mouvement ascendant dans l'espace annulaire compris entre les parois des formations géologiques forées et le train de tiges. Ses fonctions sont multiples : outre refroidir et lubrifier sans corroder l'outil de forage, la boue doit pouvoir remonter à la surface les débris arrachés aux formations. Il faut pour cela que la boue soit suffisamment visqueuse et que sa portance soit telle que les débris puissent tenir en suspension dans la boue quand le débit de celle-ci est nul. La densité de la boue doit être suffisamment élevée de façon à équilibrer la pression des pores des formations et ainsi éviter l'invasion du puits par les fluides des formations. Cette densité toutefois ne doit pas être trop élevée pour ne pas pénaliser l'avancement du forage, ou fracturer les formations.

Une autre fonction de la boue est de maintenir la paroi du puits de sorte qu'il n'y ait pas d'éboulements. Cette fonction est normalement assurée grâce à la formation d'un dépôt d'une pellicule des particules argileuses contenues dans la boue, appelé "cake" et tapissant la paroi du puits. La qualité du cake est dépendante des composants de la boue et doit être adaptée à la nature des terrains forés et de leur réactivité. Un cake de bonne qualité permet non seulement un maintien de la paroi mais également un contrôle de filtration de façon que l'invasion d'eau et/ou de la boue dans les formations soient limitées. Le colmatage des formations et en particulier des formations productives doit toutefois être évité.

Une boue de bonne qualité doit de plus être inerte vis-à-vis des formations traversées, en particulier si celles-ci contiennent des sels ou des argiles réactives. Une trop grande réactivité des composants de la boue avec les composants des formations provoque en effet des dégradations de la qualité de la paroi du puits et une pollution de la boue telle que ses qualités physiques, comme par exemple sa viscosité, sont modifiées avec comme conséquence qu'elle n'assure plus ses fonctions.

Les fonctions multiples de la boue, dont certaines sont antinomiques, font qu'il existe actuellement une grande variété de boues. Ces boues sont ordinairement des mélanges très complexes de deux à dix et plus constituants dont la composition évolue en se compliquant avec l'avancement du forage et dont la mise en oeuvre nécessite l'intervention de spécialistes. Le rôle du spécialiste est de définir la composition de la boue en début de forage et de contrôler en cours d'opération les propriétés physiques et physico-chimiques de la boue pour les maintenir ou/et les adapter en permanence aux conditions du forage par adjonction de produits adaptés comme alourdissants, réducteurs de filtration, viscosifiants, fluidifiants, colmatants ou lubrifiants, antiferments, neutralisants, et autres produits spécifiques ou chimiques.

Les colloïdes minéraux augmentent les viscosités et les gels. La bentonite, par exemple, qui est souvent utilisée dans les boues à l'eau douce (cf. notamment US-A-2 854 407, contribue également à la formation d'un cake protégeant les parois du puits de l'éboulement et aide au contrôle du filtrat.

Parmi les colloïdes organiques, certains sont utilisés comme réducteurs de filtration, d'autres comme viscosifiants, d'autres encore comme fluidifiants. L'introduction de fluidifiants dans la composition de la boue est nécessaire quand les viscosités augmentent fortement sous l'effet d'une augmentation de la charge argileuse par exemple.

La carboxyméthylcellulose (CMC), par exemple, qui est un colloïde dérivé de la cellulose est couramment utilisée comme additif quand il est nécessaire d'améliorer la portance de la boue par augmentation de la viscosité apparente. Une amélioration de la portance par un tel procédé se traduit en contrepartie par une augmentation des pertes de charges. Les dérivés de cellulose peuvent également, entre autres produits, intervenir dans la composition des boues comme agents de contrôle de filtration.

Des électrolytes ou d'autres produits chimiques peuvent également être introduits dans la composition de la boue, pour modifier le pH tel la soude par exemple, ou pour neutraliser des réactions entre les composants de la boue et ceux des formations.

Il est bien connu que des biopolymères peuvent entrer dans la composition d'une boue comme viscosifiant. Outre des propriétés remarquables de viscosifiant, les biopolymères utilisés habituellement pour les boues de forage présentent une bonne compatibilité avec les agents de filtration, et ils sont de plus biodégradables, ce qui a pour effet de réduire les problèmes de colmatage et d'éliminer les rejets polluants.

La citation US 4,561,985 décrit des boues de forage dans lesquelles est incorporé comme agent viscosifiant soit un polysaccharide non ionique hydrosoluble sélectionné dans la famille des dérivés cellulosiques ou des dérivés de guar, soit un polysaccharide anionique hydrosoluble sélectionné dans le groupe des carboxyméthylcelluloses ou le groupe des polysaccharides obtenus à partir du Xanthomonas campestris, soit un mélange de ces polysaccharides.

La citation EP-A-0 259 939 décrit l'utilisation des xanthanes et des succinoglycanes avec un formiate métallique, notamment formiate de sodium, dans les fluides de forage. La citation GB-A-1 591 313 propose des fluides de forage à base de xanthane, hydroxyéthyl cellulose et bentonite tandis que la citation GB-A-2 153 834 préconise l'addition de microorganismes à des solutions de polymères pour en augmenter la viscosité.

Le xanthane en particulier est un hétéro-polysaccharide anionique obtenu par fermentation à partir de l'action d'un microorganisme du type Xanthomonas. Son poids moléculaire dépasse le million et il intervient aujourd'hui très souvent dans la composition des boues de forage. Ce colloïde hydrophile a non seulement la propriété d'épaissir mais encore de stabiliser les systèmes à base d'eau en leur conférant une viscosité particulièrement élevée, de l'ordre de 1,4 à 1,6 Pa.s à 30 t/mn au rhéomètre Brookfield pour une solution comprenant 10 % de xanthane en poids, en présence de 5 g/l de NaCl. Il est de plus peu sensible à des variations importantes de température, de pH ou de salinité.

L'introduction du xanthane en tant que viscosifiant dans la composition d'une boue de forage ne permet toutefois pas de pouvoir se passer des autres constituants nécessaires ordinairement à la composition de la boue pour assurer ses autres fonctions.

Le scléroglucane est un autre polysaccharide produit par fermentation d'un champignon du type Sclérotium dont on connaît certaines applications dans le domaine pétrolier. Ainsi, la citation EP-A-0 216 661 décrit une application du scléroglucane dans le domaine de la récupération assistée du pétrole. La citation FR-A-2 570 754 cite d'autres applications possibles de ce produit dans le domaine du traitement des puits d'hydrocarbures, en particulier comme fluide de complétion ou agent de nettoyage des conduites de transport d'huile ou de gaz ou encore comme fluide de fracturation.

On connaît certaines propriétés du scléroglucane. Ainsi le scléroglucane est, comme le xanthane, un colloïde hydrophile qui a la propriété d'épaissir et de stabiliser les systèmes à base d'eau en leur conférant une viscosité particulièrement élevée, supérieure à celle obtenue pour le xanthane pour des concentrations identiques de produits actifs, et surtout une grande indépendance de ces viscosités vis-à-vis des variations de pH et de température dans une très large gamme, ansi que des propriétés rhéologiques de type pseudoplastique. Ainsi la viscosité d'une solution de scléroglucane est pratiquement indépendante du pH entre pH 1 et pH 12,5 et de la température jusqu'à une limite qui se situe aux environs de 130°C. Le scléroglucane présente également une grande indépendance de la viscosité en fonction de la salinité.

Les xanthanes ou scléroglucanes utilisés usuellement dans les applications du domaine pétrolier sont des variétés raffinées se présentant sous la forme de poudre blanche obtenue par précipitation alcoolique d'un moût de fermentation après filtration pour éliminer les résidus de l'organisme producteur. Il est usuel dans les applications connues des biopolymères dans le domaine des traitements de puits de purifier ou raffiner le milieu réactionnel liquide issu de la fermentation et renfermant le biopolymère en question de façon à séparer tout ou partie des résidus qu'il contient, par filtration ou centrifugation ou concentration dudit milieu réactionnel, de sorte que les agents de traitement ne comportent pas plus de 10 à 15 % desdits résidus, constitués de mycélium pour le scléroglucane.

Le xanthane est fabriqué par une bactérie dont la taille n'est que de quelques nanomètres. Le mycélium du scléroglucane filamenteux et ramifié, est de taille macroscopique. Même après broyage, les résidus cellulaires restent de l'ordre du millimètre.

On a maintenant trouvé qu'en utilisant du scléroglucane renfermant, en poids, plus de 15% de mycélium pour constituer au moins une partie de l'agent viscosifiant d'une boue de forage, on pouvait diminuer de façon conséquente la concentration des autres constituants de la boue ou même les supprimer. En effet, l'introduction d'un tel scléroglucane comme constituant principal permet l'élaboration d'une boue à l'eau comprenant un minimum de constituants assurant ses fonctions de façon satisfaisante dans un grand nombre de cas dans la mesure où la présence du mycélium dans la boue améliore certaines des fonctions de celle-ci. C'est ainsi par exemple qu'une boue au scléroglucane non raffiné semble mieux préserver le terrain qu'une boue au scléroglucane raffiné ou une boue de chantier de caractéristiques physiques et chimiques semblables. Le terrain est alors moins sensible à l'effet d'érosion et de destruction mécanique et la présence de mycélium entraîne une meilleure préservation des parois du puits et inhibe en quelque sorte la réaction des argiles des formations.

Le mycélium en suspension dans la boue au scléroglucane peut même dans certains cas jouer le rôle de colmatant.

De plus la présence du mycélium modifie l'interaction entre le polymère et les solides et rend la viscosité d'une solution au scléroglucane non raffiné encore moins sensible à la charge argileuse.

On constate encore que la présence de mycélium améliore le contrôle du filtrat et peut même dans certains cas éviter l'emploi spécifique d'un réducteur de filtration, ou du moins permet d'en diminuer les quantités utiles.

La présence de scléroglucane provoque un phénomène d'encapsulation des argiles réactives par exemple contenues dans la boue et la présence de mycélium, associée à l'excellente portance des suspensions au scléroglucane favorise l'élimination des déblais provenant du forage, qui restent en masse, et rend le tamisage ou l'élimination par moyens mécaniques en surface plus efficace. On n'observe pas en effet en présence de mycélium de phénomène de délitage dans une boue au scléroglucane. Il apparaît, comme autre phénomène observé, que les déblais remontés à la surface par la boue en cours de forage sont à l'état plus brut donc mieux préservés avec une boue au scléroglucane non raffiné qu'avec une boue d'une autre nature et sont donc d'un intérêt accru pour les géologues qui les étudient.

L'invention a donc pour objet une composition de base pour boue de forage à l'eau consistant en un mélange d'eau, d'une quantité utile, c'est-à-dire suffisante pour obtenir la viscosité souhaitée, de scléroglucane non raffiné renfermant, en poids, plus de 15 % de mycélium, de 0 g/l à 50 g/l d'un colloïde minéral non réactif, de 0 g/l à 50 g/l de carbonate de calcium micronisé et de 0 % à 0,5 % en poids d'un bactéricide, ce dernier pour éviter tout phénomène de biodégradation.

Le bactéricide, par exemple du type PROXEL commercialisé par ICI, sera introduit dans la composition selon l'invention pour les opérations devant durer par exemple plus de deux ou trois jours, pour lutter contre la dégradation bactérienne et ses effets. La quantité de bactéricide, qui représente entre 0 % et 0,5 % du poids de la composition, est inférieure à celle du scléroglucane non raffiné.

Les scléroglucanes, qui entrent dans la composition des boues selon l'invention, sont des homopolysaccharides hydrosolubles non ioniques de poids moléculaires dépassant 500 000 dont les molécules sont constituées d'une chaîne linéaire principale formée de motifs D-glucose liés par des liaisons $\beta$ 1,3 et dont un sur trois est lié à un motif D-glucose latéral par une liaison $\beta$ 1,6. Ces polysaccharides sont obtenus par fermentation d'un milieu à base de sucre et de sels minéraux sous l'action d'un microorganisme de type sclérotium. Une description plus complète des scléroglucanes et de leur préparation peut être trouvée dans la citation US-A-3.301.848, dont le contenu est incorporé par référence à la présente description. En solution aqueuse, les chaînes de scléroglucane sont associées en triple hélice, ce qui explique la grande rigidité du biopolymère et en conséquence son haut pouvoir viscosifiant et sa résistance au cisaillement.

Comme indiqué plus haut, le scléroglucane entrant dans la composition de la boue selon l'invention est un scléroglucane non raffiné renfermant, en poids, plus de 15 % du mycélium du champignon producteur. Un tel scléroglucane non raffiné peut même contenir la totalité dudit mycélium.

Avantageusement, la composition de base pour la boue selon l'invention renfermera 1 g/l à 10 g/l de scléroglucane et de préférence 2 g/l à 5 g/l de scléroglucane non raffiné.

Avantageusement, la composition de base de la boue de forage selon l'invention comporte, pour assurer un meilleur contrôle de filtration, un colloïde minéral tel que la bentonite ou du carbonate de calcium micronisé dont la granulométrie est adaptée, de préférence entre $5 \times 10^{-6}$ m et $100\ 10^{-6}$ m, dans des proportions moindres qu'usuellement pour des boues de forage à l'eau dont le viscosifiant est composé d'un biopolymère autre que le scléroglucane. Dans la composition selon l'invention, la proportion de bentonite est de préférence comprise entre 0 g/l et 30 g/l, et la proportion de carbonate de calcium micronisé entre 0 g/l et 50 g/l.

L'eau entrant dans la composition de la boue peut être de nature quelconque et de pH quelconque. On peut par exemple utiliser une eau douce, une saumure, ou même une eau additivée d'un sel quelconque tel qu'un sel alcalin ou alcalino-terreux, comme du carbonate de soude, chlorure de sodium, chlorure de potassium, etc.

Bien que cela ne soit pas indispensable avec la composition selon l'invention, il peut être nécessaire d'ajuster le pH d'une boue de forage. Une boue alcaline à PH élevé a un effet anticorrosif et aide au gonflement des argiles réactives constituantes de la boue nécessaire pour qu'elle assure au mieux ses fonctions. De plus, la plupart des produits ou additifs que l'on peut vouloir ajouter à la composition d'une boue de base présentent une meilleure stabilité en milieu basique. On inclura donc avantageusement dans la composition de base d'une boue selon l'invention un composé à réaction basique, par exemple NaOH ou KOH dans une proportion telle que le pH de la boue ainsi obtenue soit compris entre 8 et 10 et de préférence entre 9 et 9,5.

La boue de forage selon l'invention peut encore renfermer des additifs divers utilisés plus ou moins couramment pour la composition des boues de forage.

Une telle composition selon l'invention comportant en solution, en suspension, ou en solution colloïdale, dans une eau de fabrication quelconque du scléroglucane en quantité suffisante et un colloïde minéral en petite quantité, auxquels on a éventuellement rajouté une base et/ou un bactéricide, constitue une composition de base pour boue de forage prête à être injectée présentant des avantages certains. Une telle composition peut constituer en elle-même une boue de forage que l'on utilise telle que, dans la mesure où elle assure les principales fonctions d'une boue comme agent viscosifiant, agent de transport, agent de contrôle de filtration, et agent encapsulant.

Avec la composition selon l'invention, on dispose d'un très bon viscosifiant nécessitant des quantités de viscosifiant moindre que celles utilisées usuellement, et qui en outre est insensible aux variations de pH, de température de salinité, de charges argileuses. De plus, le scléroglucane entrant dans la composition étant non raffiné, on obtient une composition assurant un contrôle du filtrat correct, une bonne préservation des parois et un bon nettoyage du puits sans pénalisation de la vitesse d'avancement du forage.

L'emploi de cette composition permet, de fait, une économie sur la quantité des produits utilisés tels que le viscosifiant ou le colloïde minéral. A titre d'exemple, la quantité de bentonite nécessaire pour une boue à l'eau dont le viscosifiant est du xanthane, se situe classiquement entre 20 et 50 grammes par litre, tandis que dans la composition selon l'invention, on peut se contenter, pour obtenir des effets équivalents, de quantités ne dépassant pas 30 grammes par litre. De même, on pourra limiter et même supprimer dans certains cas, l'emploi de dérivés cellulosiques utilisés comme colmatant, le mycélium contenu dans la composition selon l'invention assurant du moins en partie cette fonction. De même encore l'emploi de PAC (polyanionic cellulose) ou de CMC utilisé pour augmenter la viscosité apparente aux faibles vitesses de transport et améliorer la portance pour une meilleure évacuation des déblais, ne se justifie plus avec l'emploi de la composition selon l'invention.

De même, enfin, l'emploi de certains produits chimiques pour traiter certaines pollutions par NaCl ou sels calciques par exemple ne sont plus nécessaires avec la composition selon l'invention, du fait de sa plus grande tolérance aux dites pollutions.

Outre le fait que cette boue comporte un nombre limité de constituants de mise en oeuvre simple, cette boue peut être utilisée sans précautions particulières dans une large gamme de puits et pour le forage de tout type de formation, et convient plus particulièrement aux forages à températures élevées et/ou à boues salées.

On entend par température élevée des températures pouvant atteindre 120°C. Pour des températures allant au-delà de cette limite, des phénomènes de gélification irréversible peuvent apparaître après un certain vieillissement de l'ordre, en laboratoire, de 16h pour une température T = 140°C et supérieur à 100h pour T = 120°C. Le phénomène se produit par exemple pour les solutions à 5 g/l dans de l'eau douce soit basique, soit en présence d'une quasi saturation en chlorure de sodium ou de calcium, soit en présence, et uniquement en présence, de solides. Dans une solution sans solides, le polymère se dégrade sans gélification pour des températures supérieures à T = 130°C.

La composition de base pour boue de forage selon l'invention est préparée en mélangeant, sous agitation, le scléroglucane sous quelque forme que ce soit, solide ou suspension, en quantités appropriées pour obtenir les concentrations citées plus haut, à la quantité d'eau nécessaire à la fabrication de la boue. En règle générale, il est recommandé de réaliser une solution à 1 % de scléroglucane qui après 20 minutes d'agitation est amenée à la concentration désirée. L'agitation mécanique doit être suffisamment énergique pour apporter le cisaillement indispensable, tout en évitant une inclusion d'air. On remarque que ce cisaillement, nécessaire pour une bonne dispersion, améliore la viscosité contrairement à la plupart des colloïdes connus. Après gonflement, la solution est amenée à la concentration recherchée. Si l'on désire une viscosité supérieure à 0.1 Pa.s, la concentration doit être supérieure à 0,5 % en poids. Les quantités respectives de colloïde minéral et de bactéricide, s'il est utilisé, ajoutés à l'eau sont choisies pour que les concentrations de ces constituants dans la suspension résultante soient situés dans les intervalles définis précédemment. La quantité du composé à réaction basique, s'il est utilisé, est ajustée pour amener le pH de la suspension à la valeur choisie. Les constituants à savoir le scléruglucane, le colloïde minéral et le cas échéant le bactéricide et le composé à réaction basique ajoutés à l'eau peuvent l'être dans un ordre quelconque. Toutefois, il est préférable d'abord de dissoudre à l'eau destinée à former la phase aqueuse de la suspension, le composé à réaction basique s'il s'agit en particulier de soude ou de potasse avant d'incorporer à la solution obtenue le colloïde minéral puis l'agent à base de scléroglucane et enfin le bactéricide.

Par rapport à une composition comportant du xanthane à égale quantité, la composition selon l'invention présente un certain nombre d'avantages. Outre un très bon rendement viscosimétrique, au moins égal à celui d'une composition au xanthane, la composition selon l'invention présente une très bonne résistance dans une gamme de pH étendue, une meilleure tenue en température au moins jusqu'à 120°C, ses caractéristiques rhéologiques restant stables à cette température tandis que vieillies 16H à 120°C une solution à 5 g/l de xanthane Rhodopol XB23 de Rhône Poulenc, par exemple, perd toutes ses propriétés viscosifiantes, tant en eau douce qu'en eau de mer. En présence de mycélium, on préfèrera toutefois travailler en milieu neutre ou basique. On a trouvé également que les compositions selon l'invention présentaient une bonne résistance à des charges argileuses importantes, jusqu'à 150 g/l et plus, sur des argiles peu réactives, dans la mesure où les caractéristiques rhéologiques de ces compositions restent faibles en présence de charge, et comparables à celles d'une solution de base non contaminée contrairement à ce qui se passe pour des compositions à base de xanthane.

En présence d'argile réactive comme la bentonite CLARSOL FB2 ou de l'attapulgite, il se produit dans les compositions à base de scléroglucane non raffiné un effet d'encapsulation de ces argiles sous forme de petits agrégats destructibles par agitation violente ou cisaillement.

On a encore trouvé que les compositions selon l'invention présentent une bonne résistance aux électrolytes, le polymère supportant sans problème des salinités de 120 g/l de chlorure de sodium ou de potassium, avec de faibles variations des caractéristiques rhéologiques, y compris en présence de charge argileuse. Le contrôle du filtrat est correct en présence de diverses argiles réactives ou non et de diverses contaminations par électrolyte ou calcium par exemple. Des essais effectués sur des échantillons à base d'eau douce ou d'eau salée montrent que ces résultats sont quasiment indépendants du type d'eau utilisé. Le contrôle du filtrat toutefois semble meilleur en eau douce qu'en eau de mer, tandis que les contaminations supplémentaires par chlorure de sodium, calcium ou argiles par exemple semblent mieux supportées du point de vue rhéologique par le polymère en eau de mer plutôt qu'en eau douce.

Les compositions de base pour boue de forage selon l'invention conviennent tout particulièrement pour le forage de tout type de puits quel que soit le domaine d'application par exemple pétrolier, minier, génie civil ou tout autre domaine d'application, par exemple le forage d'eau.

L'invention est illustrée par les exemples suivants donnés à titre non limitatif.

Le matériel utilisé pour les mesures est normalisé (norme API RP 13). Le comportement rhéologique des solutions testées a été évalué à l'aide d'un viscosimètre FANN 35 à six vitesses à savoir 600 - 300 - 200 - 100 - 60 et 30 tours par minutes (t/mn), correspondant chacune à un gradient de vitesse exprimé en seconde inverse (s$^1$) respectivement 1020, 510, 340, 170, 85, 51 s$^1$ . Cet appareil fournit une mesure de contrainte de cisaillement directe appelée lecture FANN exprimée ici en Pascal. FANN est une marque d'appareils auxquels on applique des procédures particulières.

Le rhéomètre FANN est un appareil à cylindres coaxiaux dont le rotor est entraîné à l'aide d'un moteur électrique (il existe de même un rhéomètre mécanique dont le rotor est entraîné à la main). On mesure la résistance au cisaillement de la boue contenue dans un gobelet dans lequel on immerge les cylindres coaxiaux. On lit (lecture FANN) sur le cadran gradué la résistance au cisaillement à différentes vitesses de rotation du rotor. La viscosité de la boue entraîne une rotation du stator indiquée sur le cadran de lecture.

Les mesures de filtration sont effectuées au bout de 30 minutes à l'aide d'un filtre presse API, et s'expriment en millilitres.

Le scléroglucane utilisé est fabriqué par SANOFI BIO INDUSTRIES à partir d'une souche de Sclerotium Rolsfii. Deux qualités de scléroglucane sont utilisées dans les exemples suivants : une qualité raffinée contenant moins de dix pour cent de résidus de mycélium, commercialisée sous le nom d'ACTIGUM CS11, et une qualité non raffinée comprenant de l'ordre de 25 % de résidus de mycélium, commercialisée sous le nom d'ACTIGUM CS6. Le xanthane utilisé dans les tests décrits ci-après est commercialisé par RHONE POULENC sous le nom RHODOPOL XB23 (XB23 ci-après) et comprend environ 90 % de matière active. L'hydratation des scléroglucanes a été faite sous agitation au RAYNERI durant 2 heures.

Tous les essais suivants ont été effectués avec du scléroglucane préalablement traité par 1 à 2 % d'agent mouillant, à savoir un ester de sorbitane, pour faciliter l'hydratation. Les essais ont été effectués sur des solutions à 5 g/l dans de l'eau douce ou de l'eau de mer, sans ajustement de pH, à moins d'indication contraire, obtenues à partir de la même solution de base (préparation d'échantillon de 20 litres pour tous les essais).

EXEMPLE 1 :

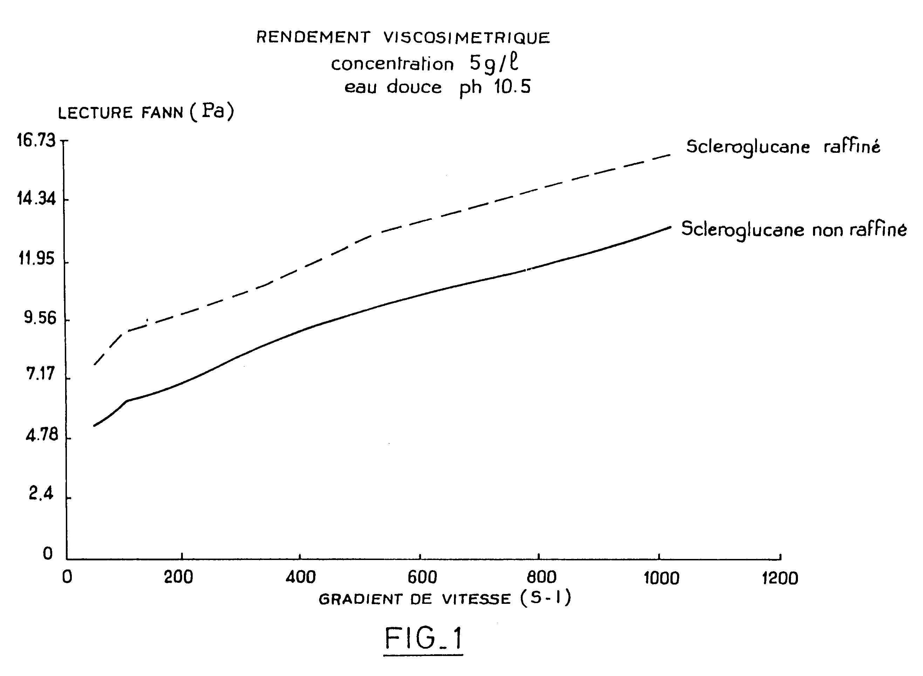

Les courbes de la figure 1 permettent de comparer le comportement viscosimétrique en lecture FANN d'un scléroglucane raffiné et d'un scléroglucane non raffiné pour une même concentration à savoir 5 g/l dans une eau douce à pH égal à 10,5. On constate que le rendement des scléroglucanes raffinés est supérieur d'environ 20 % à celui des scléroglucanes non raffinés. Cet écart est dû à la seule différence de concentration en produit actif entre les scléroglucanes testés.

EXEMPLE 2 :

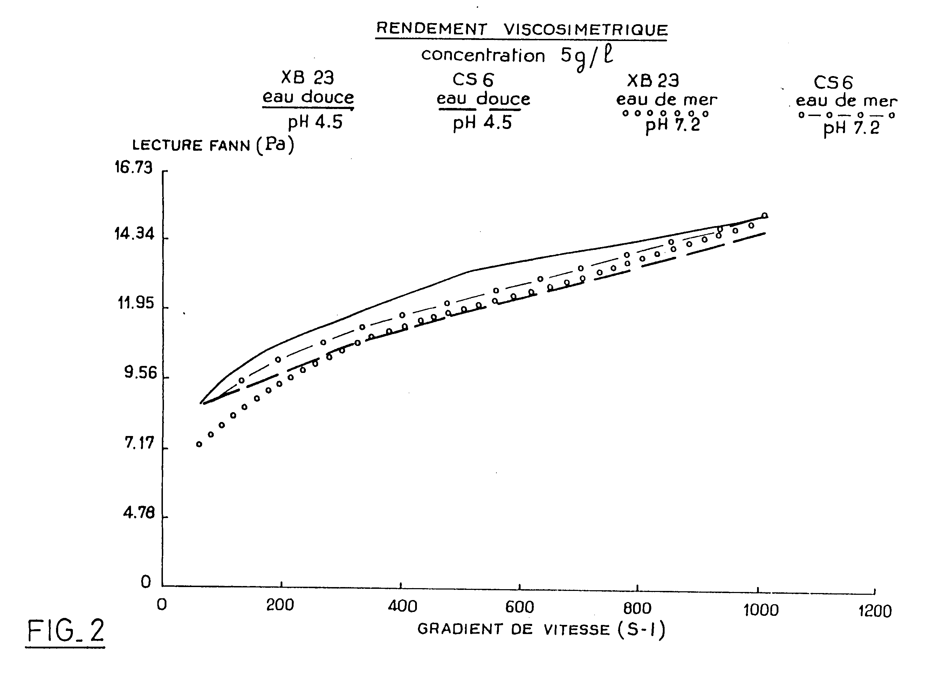

On a comparé le rendement viscosimétrique entre une suspension de scléroglucane non raffiné CS6 et une suspension de xanthane XB23 pour une même concentration égale à 5 g/l d'une part dans une eau douce à pH égal à 4,5 et d'autre part dans une eau de mer pH égal à 7,2. Les courbes de la figure 2 permettent de comparer les résultats obtenus en lecture FANN. On constate qu'à poids égal de matière active les rendements, en eau douce légèrement acide, sont largement équivalents et qu'en eau de mer le rendement du scléroglucane est meilleur.

EXEMPLE 3 :

On a comparé le comportement viscosimétrique de suspensions de scléroglucane non raffiné CS6 à 5 g/l en eau douce ou en eau de mer pour différentes charges d'argiles non réactives. Les suspensions ont été préparées et comparées dans les mêmes conditions. Les mesures ont été faites pour deux argiles de charge différentes à savoir de l'argile brute CLARSOL FGN (smectite) et de la kaolinite, et pour trois concentrations différentes d'argile : 50, 100 et 150 g/l.

Le tableau 3 permet de comparer les lectures FANN de ces suspensions différemment chargées avec la suspension de base. Les essais ont été effectués pour des compositions à base d'une eau douce neutre d'une part et des compositions à base d'une eau de mer à pH égal à 7,1 d'autre part.

## TABLEAU 3 - charge argileuse — Lecture FANN

**CS6 5g/ℓ**

| | Eau douce PH = 7 | | | | | | | Eau de mer PH = 7,1 | | | | | | |
|---|---|---|---|---|---|---|---|---|---|---|---|---|---|---|
| | Solution de base | 50 g/ℓ | FGN 100 g/ℓ | 50 g/ℓ | Kaolinite 100 g/ℓ | 50 g/ℓ | | Solution de base | 50 g/ℓ | FGN 100 g/ℓ | 150 g/ℓ | 50 g/ℓ | Kaolinite 100 g/ℓ | 150 g/ℓ |
| FANN 600 | 12,4 | 12,9 | 16,3 | 18,2 | 15,3 | 13,4 | 17,2 | 12,9 | 13,9 | 15,3 | 17,2 | 13,4 | 14,8 | 17,2 |
| FANN 300 | 9,6 | 9,6 | 12, | 12,9 | 11 | 10 | 12 | 10 | 10 | 11 | 12,4 | 9,6 | 10,6 | 12,4 |
| FANN 200 | 8,6 | 8,6 | 10 | 11, | 9,1 | 8,6 | 10 | 9,1 | 8,6 | 9,6 | 11 | 8,6 | 9,1 | 10,5 |
| FANN 100 | 7,2 | 7,2 | 8,1 | 9,1 | 7,2 | 6,7 | 7,6 | 7,6 | 7,2 | 7,6 | 8,6 | 7,2 | 7,2 | 7,6 |
| FANN 60 | 6,7 | 6,7 | 7,2 | 8,1 | 6,7 | 6,2 | 6,7 | 6,7 | 6,7 | 7,2 | 7,6 | 6,7 | 6,7 | 6,7 |
| FANN 30 | 6,2 | 5,7 | 6,2 | 7,2 | 5,7 | 5,7 | 5,7 | 6,2 | 5,7 | 6,2 | 6,7 | 5,7 | 5,7 | 5,7 |

**XB23 5g/ℓ**

| | Eau douce PH = 4,5 | | | Eau de mer PH = 7,2 | | |
|---|---|---|---|---|---|---|
| | Solution de base | FGN 100 g/ℓ | Kaolinite 100 g/ℓ | Solution de base | FGN 100 g/ℓ | Kaolinite 100 g/ℓ |
| FANN 600 | 13,4 | 18,2 | 13,9 | 11,9 | 20,6 | 19,1 |
| FANN 300 | 11, | 14,8 | 11,5 | 8,6 | 15,8 | 14,8 |
| FANN 200 | 10, | 12,9 | 10,5 | 7,2 | 13,4 | 12,9 |
| FANN 100 | 8,1 | 11,5 | 9,1 | 5,7 | 11 | 10,5 |
| FANN 60 | 7,6 | 10,5 | 8,1 | 4,8 | 9,6 | 9,6 |
| FANN 30 | 6,7. | 9,1 | 7,2 | 4,3 | 8,6 | 8,1 |

On constate pour les suspensions au scléroglucane une très bonne tenue rhéologique, l'augmentation des contraintes lues étant due à la seule augmentation de la teneur en solides. On peut même observer pour les plus faibles concentrations d'argile et les faibles taux de cisaillement une baisse paradoxale des viscosités des suspensions contenant du scléroglucane non raffiné par rapport à la suspension de base sans argile. Cet effet est moins marqué pour les scléroglucanes non raffinés que pour les scléroglucanes

8

raffinés (mesures non reportées), du fait de la présence de mycélium. Les rhéologies pour la kaolinite sont comparables à celles obtenues pour la FGN. On obtient en eau de mer des résultats comparables à ceux obtenus en eau douce. Aucun phénomène de floculation de la suspension d'argile n'est observé.

Des mesures ont été effectuées après un vieillissement de 16 heures à la température de 80°C (mesures non reportées sur le tableau 3). On constate que le vieillissement n'affecte pas les rhéologies.

On a comparé ensuite le comportement viscosimétrique de suspensions de xanthane XB23 à 5 g/l en eau douce ou en eau de mer pour les mêmes différentes charges des mêmes argiles non réactives.

Les essais sont effectués dans les mêmes conditions que ceux décrits précédemment. Il est connu que les biopolymères réagissent mieux que les autres viscosifiants à l'augmentation de charge argileuse, dans la mesure où leur viscosité reste contrôlable. Les résultats figurant sur le tableau 3 montrent pour le xanthane une augmentation contrôlable mais toutefois brutale de viscosité avec l'introduction de la charge argileuse, ces augmentations nécessitent des opérations de dilution successives sur le terrain.

EXEMPLE 4 :

Le pouvoir réducteur de filtrat du scléroglucane a été évalué à partir d'un test standard API qui consiste à filtrer une suspension d'argile et de scléroglucane avec un filtre en cellulose WHATMANN 50 sous une pression de 7 bars. On mesure en fonction du temps le volume de solution filtrant à travers le cake d'argile et de polymère formé sur le filtre. Les essais ont été effectués sur des compositions à base d'eau douce comportant soit du scléroglucane non raffiné à une concentration de 7,5 g/l, soit du scléroglucane raffiné en même quantité d'une part, et sur des compositions comportant du scléroglucane non raffiné à une concentration de 5 g/l et de la bentonite FB2 à raison de 20 g/l d'autre part. Dans ce dernier cas, la quantité de scléroglucane a été diminuée à 5 g/l pour se ramener à des viscosités comparables pour tous les essais. Dans tous les cas, le pH est contrôlé par l'apport de soude ou de PTS200 de sorte que le pH est égal à 10. On a comparé le résultat obtenu pour la composition contenant 5 g/l de CS6 et 20 g/l de bentonite à une composition comprenant les mêmes constituants auxquels on a ajouté 4 g/l de CMC. La CMC est en effet couramment utilisée dans les fluides de forage car elle a un pouvoir réducteur de filtrat élevé. On a encore comparé ces compositions comportant du scléroglucane avec une composition contenant du xanthane XB23 à raison de 5 g/l et de la bentonite à raison de 20 g/l.

Les résultats, regroupés sur le tableau 4, montrent d'une part que les échantillons ne contenant pas de CMC présentent une efficacité comparable à celui contenant de la CMC. D'autre part, les échantillons de scléroglucane non raffiné, qui contiennent une concentration de matière active de 15 à 20 % en poids inférieure à celle des échantillons de scléroglucane raffiné mais 15 à 20 % en poids de mycélium en plus, présentent de façon surprenante une efficacité comparable à celle des échantillons raffinés. La composition comportant du xanthane est caractérisée par une augmentation considérable du filtrat, non contrôlable dans le cas présent.

Ces essais tendent donc à prouver que le scléroglucane peut être utilisé comme viscosifiant et réducteur de filtrat, ce qui n'est pas le cas du xanthane seul.

## TABLEAU 4 – CONTROLE DE FILTRATION

| Filtrat API (ml) 30mn | Composition des suspensions filtrées eau douce – pH 10 |
|---|---|
| 13 | CS6 (7,5g/l) |
| 13 | CS11(7,5g/l) |
| 11 | CS6 (5g/l) + Bentonite FB2 (20 g/l) |
| 10 | CS6 (5g/)1+Bentonite FB2(20g/1)+CMC(4g/1) |
|  | XB23 (5g/l) + Bentonite FB2 (30 g/) |
| 13,5 | CS6 (5g/l) + Bentonite FB2 (30 g/l) |

9

EXEMPLE 5 :

On a comparé le comportement de pastilles d'argiles réactives avec une boue de chantier et une boue au scléroglucane. Les compositions des boues sont données ci-dessous :

|  | Chantier | Scléroglucane |
|---|---|---|
| Eau douce | 1 l | 1 l |
| Soude qsp | pH : 9,6 | pH : 9,8 (env.0,5 g) |
| Bentonite | 30 g | 30 g |
| Antisol 30000 | 3 g | - |
| Antisol 100 | 1 g | - |
| CMC basse viscosité | 2 g | - |
| CS6 | - | 4 g |
| FGN | - | 60 g |
| CaCO3 micronisé |  | 20 g |

Les Antisol 30.000 et Antisol 100 sont des PAC WOLF WALSRODE haute et basse viscosité respectivement.

La composition de la boue au scléroglucane a été définie de façon à obtenir des caractéristiques physiques et chimiques semblables à la boue de chantier. Les caractéristiques des boues sont données ci-dessous :

|  | Boue chantier | Boue CS 6 |
|---|---|---|
| Densité | 1,09 | 1,07 |
| Salinité | 1 g/l |  |
| pH | 9,6 | 9,8 |
| Solides | 8 % | - |
| Filtrat 30mn | 9,6ml | 9,7ml |
| Fann 600 | 25.8Pa | 21Pa |
| Fann 300 | 16.2Pa | 14.8Pa |
| Fann 200 | 12.4Pa | 12.4Pa |
| Fann 100 | 7.6Pa | 9.6Pa |
| Fann 60 | 5.2Pa | 8.6Pa |
| Fann 30 | 3.8Pa | 6.7Pa |
| Gels 0mn/10 | 1.4Pa/2.9Pa | 5.7Pa/12.9Pa |
| VA | $27.10^{-3}$ Pa.s | $22.10^{-3}$ Pa.s |
| VP | $20.10^{-3}$ Pa.s | $13.10^{-3}$ Pa.s |
| YV | $14.10^{-3}$ Pa.s | $18.10^{-3}$ Pa.s |

On a fabriqué deux pastilles de bentonite à 75 % en poids et de kaolinite à 25 %, reconstituées. Sur ces pastilles, des essais de vieillissement avec les deux boues ont été effectués en cellule rotative à température ambiante pendant 16h.

On a constaté pour la boue chantier un doublement du volume de la pastille, ainsi qu'une destruction partielle de son pourtour. La pastille est effrangée, assez molle, peu consistante.

On a constaté pour la boue au scléroglucane un doublement de volume, mais la pastille reste régulière, intacte. La pastille est plus ferme, plus consistante que la précédente. Sur ce tableau, on a noté VA la viscosité apparente, VP la viscosité plastique, YV la "yield value".

Dans les exemples 6, 7, 8, 9 suivants, on a cherché à quantifier l'influence de la biomasse sur les caractéristiques (rhéologie, filtration) du scléroglucane.

Des mesures ont été effectuées sur trois qualités de scléroglucane, à savoir le CS11 (référence CS60 dans la suite) ne comportant pas de biomasse, celle-ci ayant été extraite, du CS6 comportant 20 % en poids de biomasse, et du CS6 auquel on a rajouté 20 % de biomasse extraite (référencé dans la suite CS6-40).

En règle générale, c'est le CS6 qui offre le meilleur compromis et donc le meilleur rapport qualité/prix.

EXEMPLE 6 : Influence de la biomasse sur la viscosité.

Les expériences ont été faites à masse de produit pur identique dans les solutions, à savoir 1, 6 g/l, 3,2 g/l et 4,8 g/l. Le scléroglucane est dispersé dans de l'eau douce à pH 9. Les mesures de rhéologie ont été faites au Carrimed à la pression atmosphérique pour différentes températures à savoir 20°C, 50°C et 70°C.

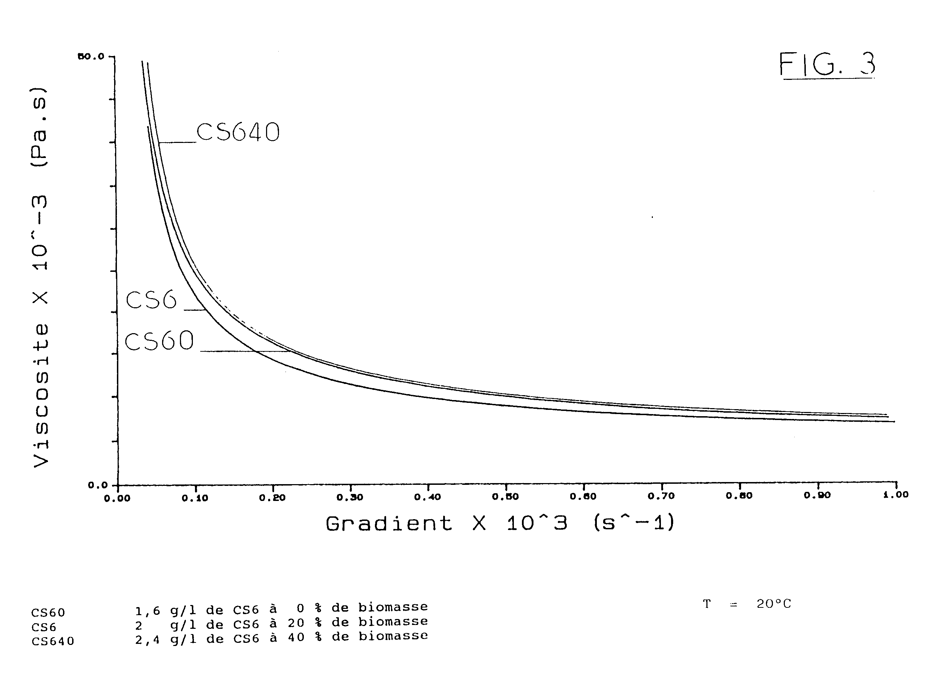

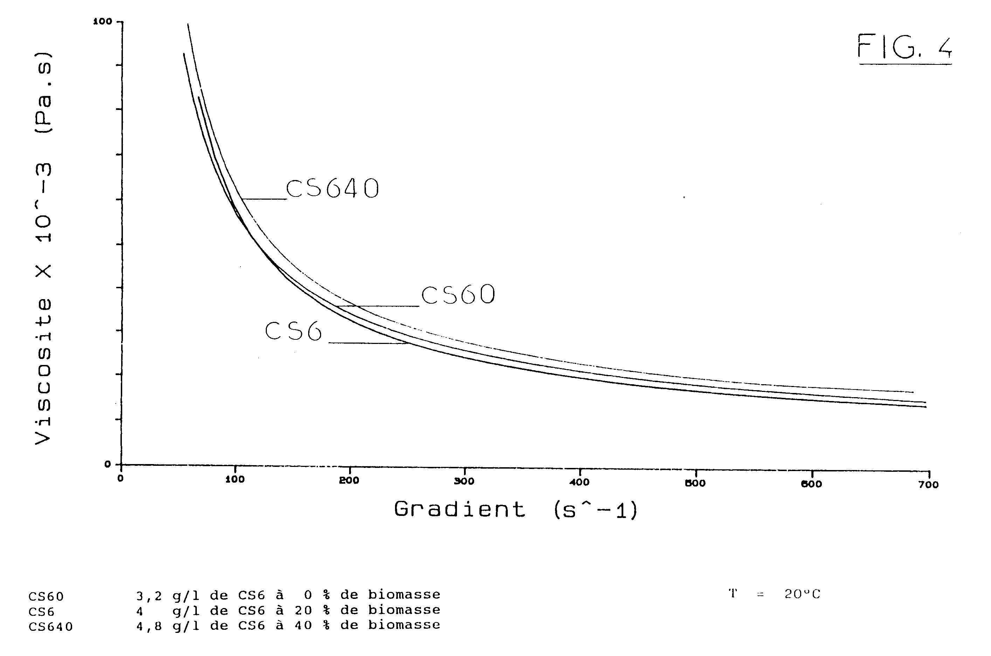

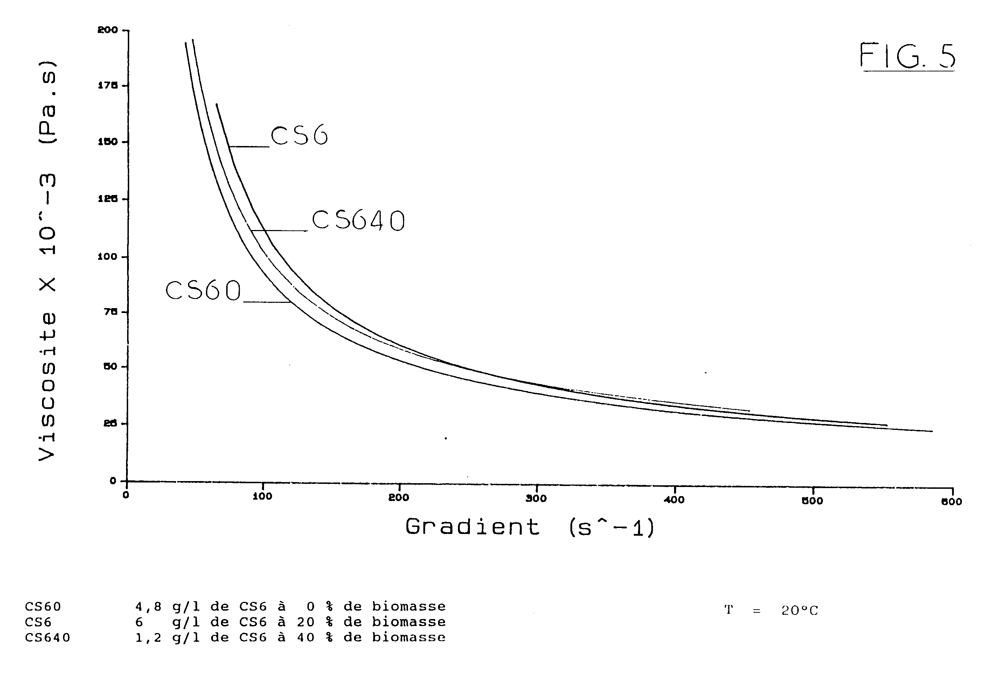

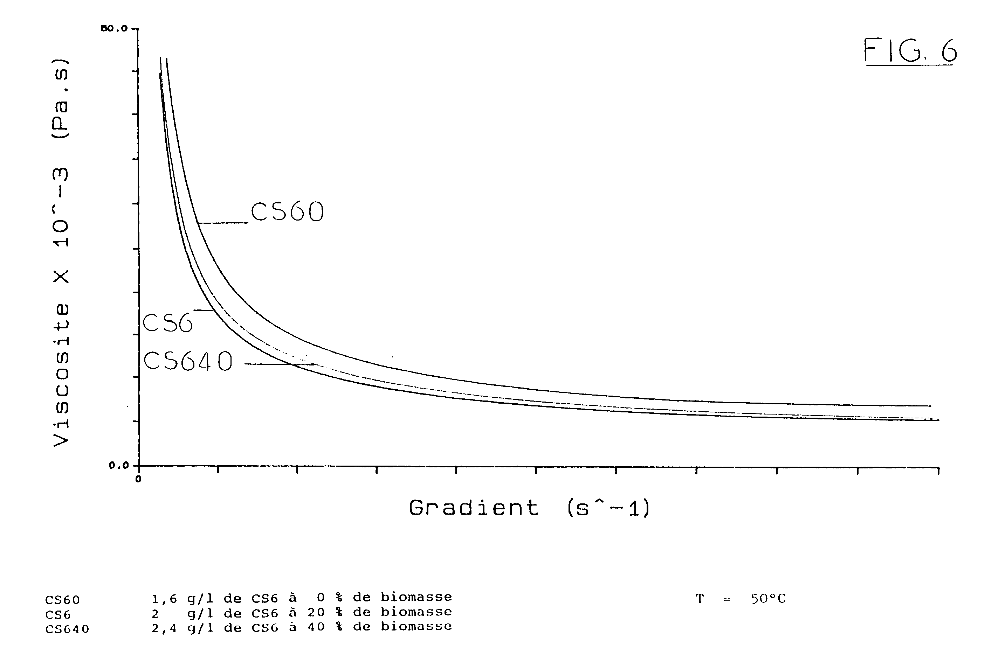

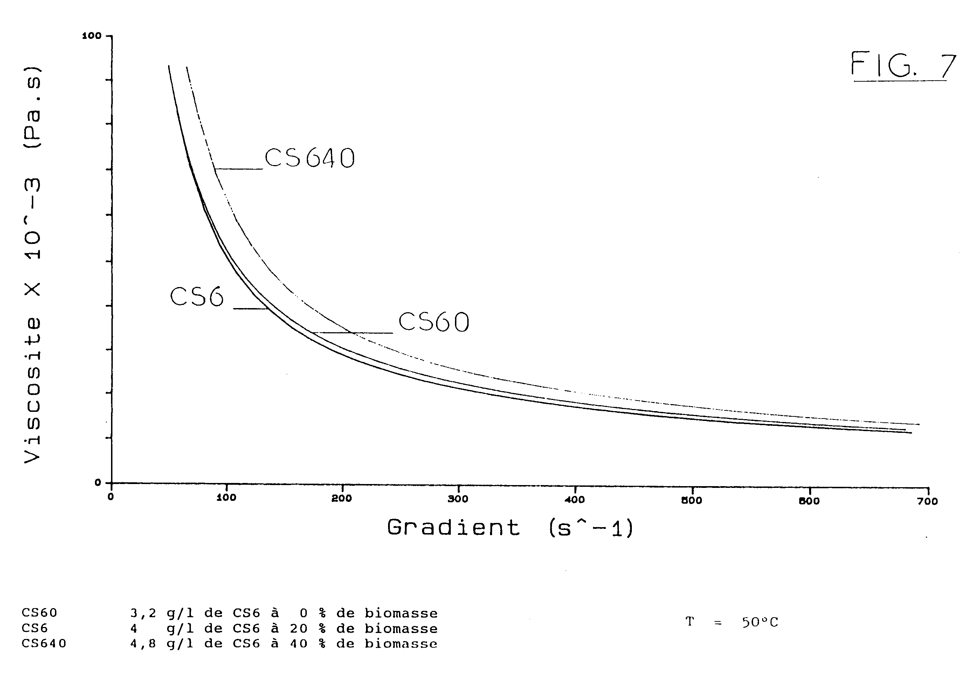

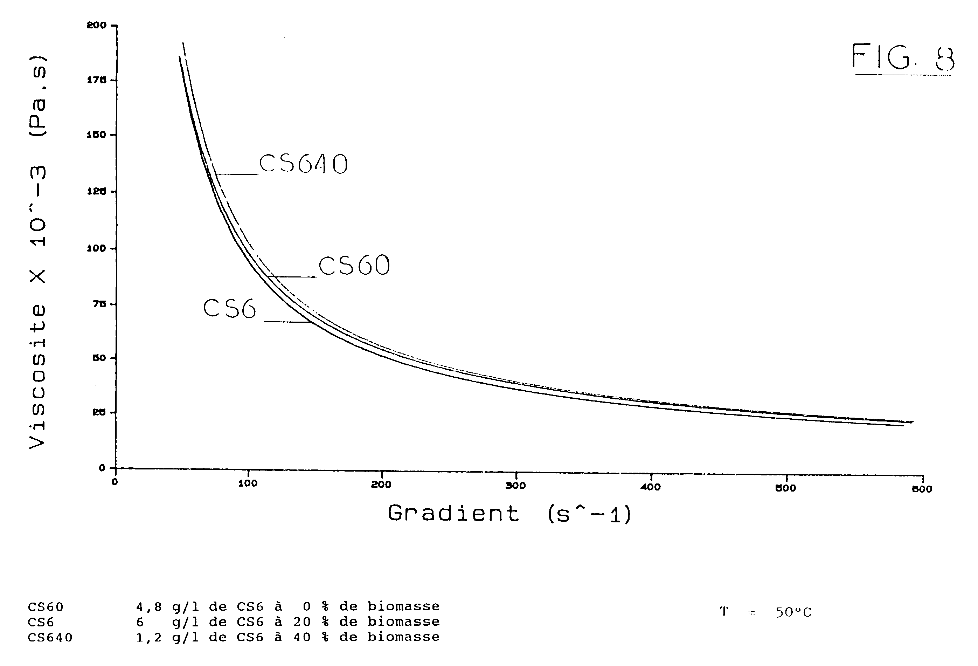

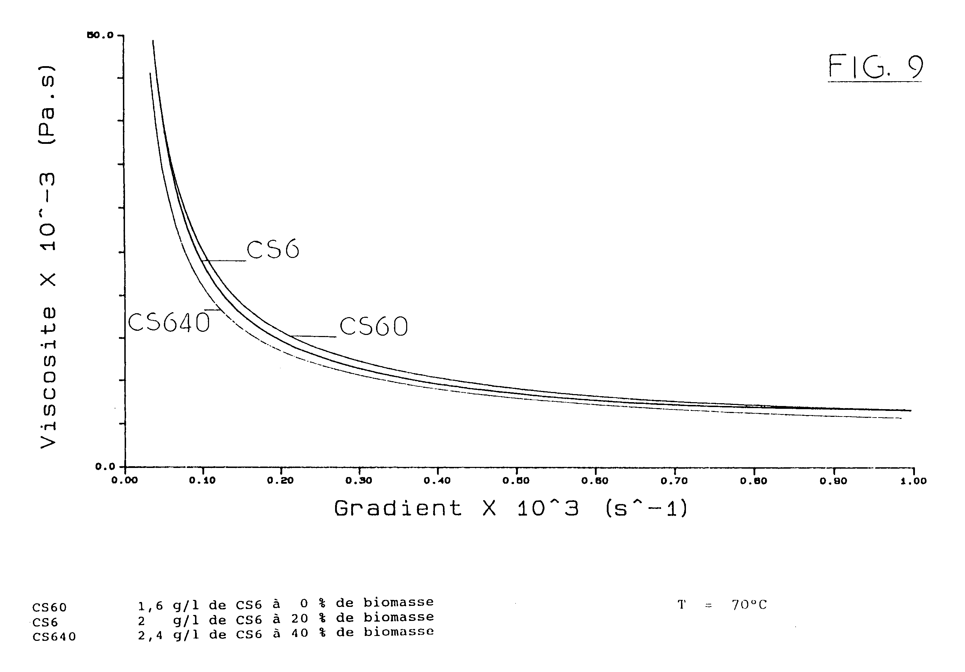

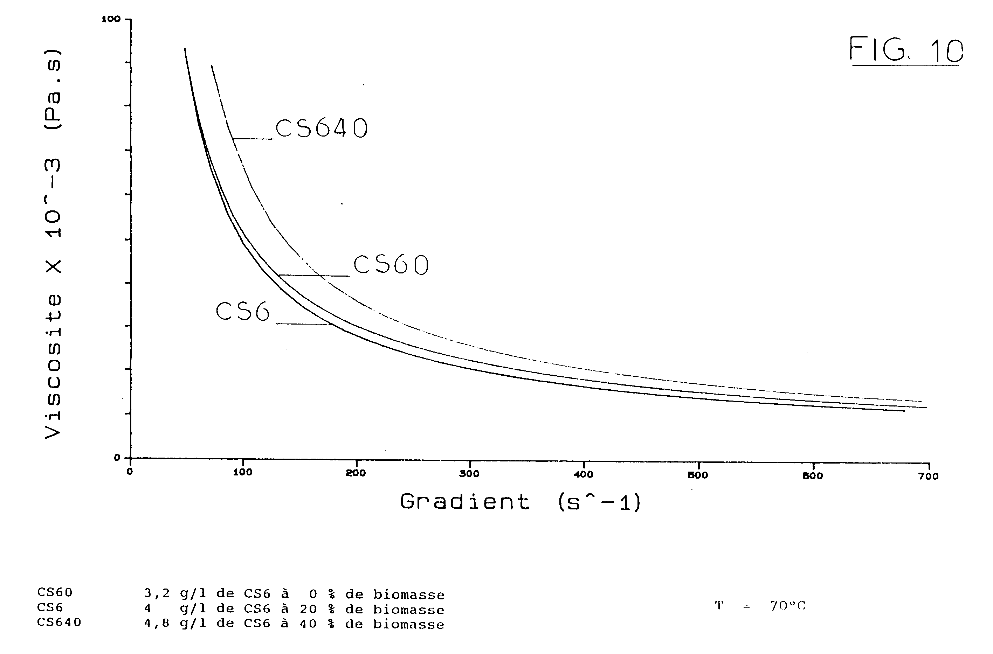

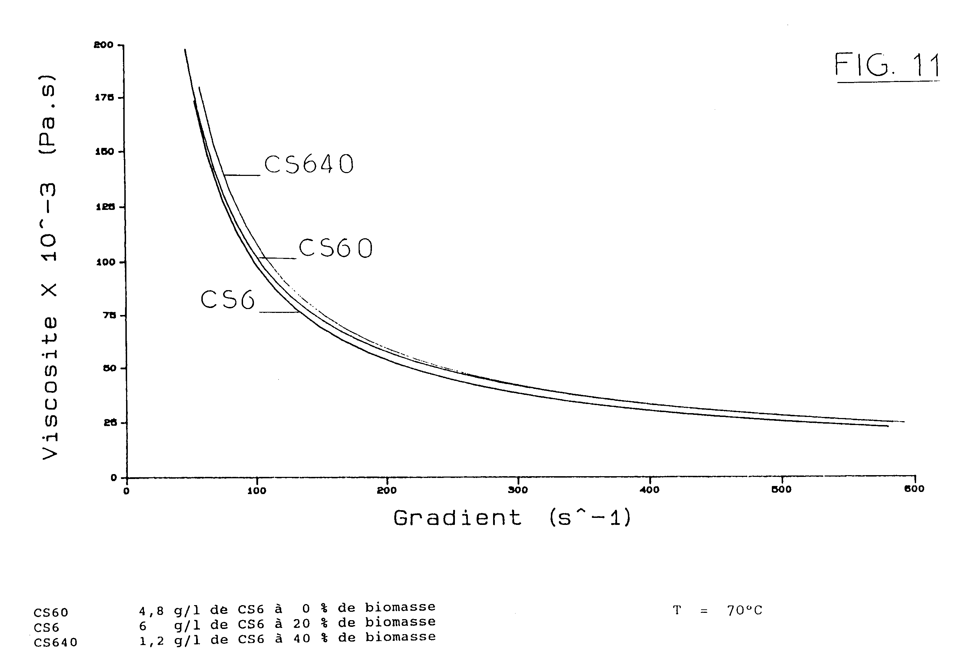

Les résultats sont reportés sur les figures 3, 4, 5 (mesures effectuées à 20°C), sur les figures 6, 7, 8 (mesures effectuées à 50°C) et sur les figures 9, 10, 11 (mesures effectuées à 70°C).

Dans les solutions à haute concentration de CS6, la biomasse apporte une très légère augmentation de la viscosité. La présence de biomasse résiduelle accroît légèrement les caractéristiques de rhéologie ainsi que la stabilité de cette rhéologie à haute température.

L'ajout de biomasse complémentaire n'a qu'un effet limité. On peut penser que cela est dû au fait que cette biomasse a subi un processus d'extraction.

EXEMPLE 7 : Influence de la biomasse sur le comportement rhéologique en température et pression (70 bars).

Les trois types de scléroglucane sont dispersés dans de l'eau douce à pH 9. Les mesures ont été faites au viscosimètre FANN 70, pour différentes températures à savoir 70°C, 90°C, 110°C, 130°C et 140°C. Les résultats sont reportés sur le tableau 5 ci-dessous. Le comportement des trois solutions est très similaire avec toutefois une meilleure résistance du CS6. On notera une très bonne stabilité de la rhéologie jusqu'à 130°C.

La limite d'utilisation est comprise entre 130 et 140°C pour les trois types de scléroglucane.

<u>TABLEAU 5</u>

Composition de la boue :

      HP HT 1 : CS6 (0 %)  3,2 g/l + eau douce pH 9

      HP HT 2 : CS6 (20 %)   4 g/l + eau douce pH 9

      HP HT 3 : CS6 (40 %) 4,8 g/l + eau douce pH 9

| HP HT 1 | | | | | |
|---|---|---|---|---|---|
| Mesures Fann | 70 bars 70°C | 70 bars 90°C | 70 bars 110°C | 70 bars 130°C | 70 bars 140°C |
| FANN 600 Pa. | 8,84 | 8,1 | 8,1 | 7,2 | 2,15 |
| FANN 300 Pa. | 7,2 | 7,2 | 7,2 | 4,78 | 1,43 |
| FANN 200 Pa. | 6,69 | 6,69 | 6,69 | 4,3 | 0,96 |
| FANN 100 Pa. | 5,74 | 5,74 | 5,5 | 3,82 | 0,48 |
| FANN 60 Pa. | 5,26 | 4,78 | 4,78 | 3,35 | |
| FANN 30 Pa. | 4,3 | 3,82 | 3,82 | 2,87 | |
| FANN 6 Pa. | 3,35 | 2,87 | 2,87 | 1,9 | |
| FANN 3 Pa. | 2,87 | 2,39 | 2,39 | 1,43 | |

| | | | | | | |
|---|---|---|---|---|---|---|
| VA | Pa.s | $9,25 \times 10^{-3}$ | $8,5 \times 10^{-3}$ | $8,5 \times 10^{-3}$ | $7,5 \times 10^{-3}$ | $2,25 \times 10^{-3}$ |
| VP | Pa.s | $3,5 \times 10^{-3}$ | $2 \times 10^{-3}$ | $2 \times 10^{-3}$ | $5 \times 10^{-3}$ | $1,5 \times 10^{-3}$ |
| YV | Pa. | 5,5 | 6,21 | 6,21 | 2,39 | 1,19 |

**HP HT 2**

| | | | | | | |
|---|---|---|---|---|---|---|
| FANN 600 | Pa. | 8,1 | 7,65 | 7,2 | 7,2 | 4,3 |
| FANN 300 | Pa. | 7,2 | 6,69 | 6,69 | 6,21 | 3,82 |
| FANN 200 | Pa. | 6,69 | 6,21 | 6,21 | 5,74 | 3,35 |
| FANN 100 | Pa. | 5,74 | 5,26 | 5,26 | 5,26 | 2,87 |
| FANN 60 | Pa. | 4,78 | 3,82 | 3,82 | 3,35 | 2,39 |
| FANN 30 | Pa. | 4,3 | 3,82 | 3,82 | 2,87 | 1,9 |
| FANN 6 | Pa. | 3,82 | 3,35 | 3,35 | 2,39 | 1,67 |
| FANN 3 | Pa. | 3,82 | 3,35 | 3,35 | 1,9 | 1,43 |
| VA | Pa.s | $8,5 \times 10^{-3}$ | $8 \times 10^{-3}$ | $7,5 \times 10^{-3}$ | $7,5 \times 10^{-3}$ | $4,5 \times 10^{-3}$ |
| VP | Pa.s | 2x10-3 | 2x10-3 | 1x10-3 | 2x10-3 | 1x10-3 |
| YV | Pa | 6,21 | 5,74 | 6,21 | 5,26 | 3,35 |

**HP HT 3**

| | | | | | | |
|---|---|---|---|---|---|---|
| FANN 600 | Pa. | 9,56 | 9,08 | 8,6 | 5,74 | 2,39 |
| FANN 300 | Pa. | 8,1 | 7,65 | 8,1 | 5,26 | 1,43 |
| FANN 200 | Pa. | 7,65 | 7,2 | 7,2 | 4,78 | 0,96 |
| FANN 100 | Pa. | 7,2 | 6,69 | 6,69 | 4,3 | 0,96 |
| FANN 60 | Pa. | 5,74 | 6,21 | 5,74 | 3,82 | 0,96 |
| FANN 30 | Pa. | 5,26 | 5,74 | 5,26 | 3,35 | 0,96 |
| FANN 6 | Pa. | 4,78 | 4,78 | 4,78 | 2,87 | 0,96 |
| FANN 3 | Pa. | 4,3 | 4,3 | 4,3 | 2,39 | 0,96 |
| VA | Pa.s | $10 \times 10^{-3}$ | $9,5 \times 10^{-3}$ | $9 \times 10^{-3}$ | $6 \times 10^{-3}$ | $2,5 \times 10^{-3}$ |
| VP | Pa.s | $3 \times 10^{-3}$ | $3 \times 10^{-3}$ | $1 \times 10^{-3}$ | $1 \times 10^{-3}$ | $2 \times 10^{-3}$ |
| YV | Pa | 6,69 | 6,21 | 7,69 | 1,43 | 0,48 |

EXEMPLE 8 : Etude de la filtration. Influence de la biomasse sur le filtrat API.

On a d'abord fait l'expérience avec du scléroglucane seul. Les trois types de scléroglucane ont été dispersés dans de l'eau douce à pH 9. Les mesures ont été faites par application du test standard API décrit à l'exemple 4, à température ambiante, pour différentes concentrations de produit pur à savoir 1,6 g/l, 3,2 g/l et 4,8 g/l. Les résultats sont regroupés dans le tableau suivant.

| CS60 | | CS6 | | CS6 40 | |
|------|------|------|------|------|------|
| Concentration | Filtrat | Concentration | Filtrat | Concentration | Filtrat |
| 1,6 g/l | ∞ | 2 g/l | 25 | 2,4 g/l | 22 |
| 3,2 g/l | 30 ml | 4 g/l | 16 | 4,8 g/l | 17 |
| 4,8 g/l | 50 ml | 6 g/l | 12 | 7,2 g/l | 13 |

On constate que la biomasse à 20 % (CS6) crée un lit filtrant. La biomasse améliore donc le contrôle de filtration. L'ajout de 20 % biomasse ayant subi un processus d'extraction n'améliore pas notablement le contrôle du filtrat.

EXEMPLE 9 : Etude de la filtration. Influence de la biomasse sur le filtrat API.

On a cette fois-ci fait les mesures de filtrat sur des solutions d'eau douce à pH 9 contenant 30 g/l de bentonite WYOMING W100 dans lesquelles du CS60 et du CS640 a été dispersé en quantité respectivement égale à 3.2 g/l, 4 g/l et 4.8 g/l. Les résultats sont regroupés dans le tableau suivant :

| CS60 | | CS6 | | CS640 | |
|------|------|------|------|------|------|
| Concentration | Filtrat | Concentration | Filtrat | Concentration | Filtrat |
| 3,2 g/l | 13 ml | 4 g/l | 12 ml | 4.8 g/l | 12 ml |

Les résultats sont à comparer avec ceux de l'exemple 8. On constate qu'en présence d'un lit filtrant l'influence de la biomasse n'est pas significative.

**Revendications**

1. Composition de base pour boue de forage à l'eau caractérisée en ce qu'elle consiste en un mélange d'eau, d'une quantité utile de scléroglucane non raffiné renfermant, en poids, plus de 15 % de mycélium, de 0 g/l à 50 g/l d'un colloïde minéral non réactif, de 0 g/l à 50 g/l de carbonate de calcium micronisé, et de 0 à 0,5 % en poids d'un bactéricide.

2. Composition selon la revendication 1, caractérisée en ce que la quantité utile de scléroglucane est comprise entre 1 g/l et 10 g/l du mélange final obtenu.

3. Composition selon la revendication 1 ou 2, caractérisée en ce qu'elle renferme 2 g/l à 5 g/l de scléroglucane non raffiné.

4. Composition selon l'une des revendications 1 à 3, caractérisée en ce que le carbonate de calcium micronisé a une granulométrie entre $5 \times 10^{-6}$ m et $100 \times 10^{-6}$ m.

5. Composition selon l'une des revendications 1 à 4, caractérisée en ce que le colloïde minéral est la bentonite.

6. Composition selon la revendication 5, caractérisée en ce que la bentonite est utilisée en quantité comprise entre 0 g/l et 30 g/l.

7. Composition selon l'une des revendications 1 à 6, caractérisée en ce que l'eau de base est une eau douce, une saumure, ou encore une eau additivée d'un sel.

8. Composition selon l'une des revendications 1 à 7, caractérisée en ce qu'elle contient en outre un composé à réaction basique en quantité adaptée pour obtenir un pH final compris entre 8 et 10.

9. Application de la composition selon l'une des revendications 1 à 7 aux forages pétroliers, aux forages miniers ou encore aux forages d'eau.

**Claims**

1. Basic composition for drilling mud comprising water, characterised in that it consists of an aqueous mixture of an active quantity of non-refined scleroglucan, containing, by weight, more than 15% of mycelium, from 0 g/l to 50 g/l of a non-reactive mineral colloid, from 0 g/l to 50 g/l of micronised calcium carbonate, and from 0 to 0.5 % by weight of a bactericide.

2. Composition according to Claim 1, characterised in that the active quantity of scleroglucan is between 1 g/l and 10 g/l of the final mixture obtained.

3. Composition according to Claim 1 or 2, characterised in that it contains from 2 g/l to 5 g/l of non-refined scleroglucan.

4. Composition according to any one of Claims 1 to 3, characterised in that the micronised calcium carbonate has a granular size of between $5 \times 10^{-6}$ m and $100 \times 10^{-6}$ m.

5. Composition according to any one of Claims 1 to 4, characterised in that the colloidal mineral is bentonite.

6. Composition according to Claim 5, characterised in that the bentonite is used in a quantity of between 0 g/l and 30 g/l.

7. Composition according to any one of Claims 1 to 6, characterised in that the water of the base is a soft water, a brine, or even a water to which a salt has been added.

8. Composition according to any one of Claims 1 to 7, characterised in that it further contains a basic reactive composition in a quantity suitable for obtaining a final pH of between 8 and 10.

9. Application of the composition according to one of Claims 1 to 7 for drilling for oil, drilling mines, or even drilling for water.

**Patentansprüche**

1. Trübebasisgemisch zum Bohren mit Wasserspülung, dadurch **gekennzeichnet,** daß es aus einem Gemisch aus Wasser und einer geeigneten Menge an nicht gereinigtem Skleroglucan besteht, das mehr als 15 Gew.-% Myzel, 0 bis 50 g/l eines nicht reaktionsfähigen Mineralkolloids, 0 bis 50 g/l fein vermahlenes Calciumcarbonat und 0 bis 0,5 Gew.-% eines Bakterizids enthält.

2. Gemisch nach Anspruch 1, dadurch **gekennzeichnet,** daß die geeignete Menge an Skleroglucan zwischen 1 und 10 g/l des erhaltenen Endgemisches ausmacht.

3. Gemisch nach Anspruch 1 oder 2, dadurch **gekennzeichnet,** daß es 2 bis 5 g/l nicht gereinigtes Skleroglucan enthält.

4. Gemisch nach einem der Ansprüche 1 bis 3, dadurch **gekennzeichnet,** daß das fein vermahlene Calciumcarbonat eine Korngrößenverteilung zwischen $5 \times 10^{-6}$ und $100 \times 10^{-6}$ m aufweist.

5. Gemisch nach einem der Ansprüche 1 bis 4, dadurch **gekennzeichnet,** daß das Mineralkolloid Bentonit ist.

6. Gemisch nach Anspruch 5, dadurch **gekennzeichnet,** daß der Bentonit in einer Menge von 0 bis 30 g/l verwendet wird.

7. Gemisch nach einem der Ansprüche 1 bis 6, dadurch **gekennzeichnet,** daß das Ausgangswasser ein Süßwasser, eine Sole oder ein mit einem Salz versetztes Wasser ist.

8. Gemisch nach einem der Ansprüche 1 bis 7, dadurch **gekennzeichnet,** daß es außerdem noch eine basisch reagierende Verbindung in einer Menge enthält, die geeignet ist, einen End-pH zwischen 8 und 10 zu erzielen.

9. Verwendung des Gemisches nach einem der Ansprüche 1 bis 7 für Erdölbohrungen, bergbauliche Bohrungen oder Wasserbohrungen.

RENDEMENT VISCOSIMETRIQUE
concentration 5 g/ℓ
eau douce ph 10.5

LECTURE FANN (Pa)

Scleroglucane raffiné

Scleroglucane non raffiné

GRADIENT DE VITESSE (S-1)

FIG_1

RENDEMENT VISCOSIMETRIQUE

concentration 5g/ℓ

| XB 23 | CS 6 | XB 23 | CS 6 |
|---|---|---|---|
| eau douce | eau douce | eau de mer | eau de mer |
| pH 4.5 | pH 4.5 | pH 7.2 | pH 7.2 |

LECTURE FANN (Pa)

FIG_2

GRADIENT DE VITESSE (S-1)

EP 0 453 366 B1

FIG. 3

EP 0 453 366 B1

Gradient X 10^3 (s^-1)

Viscosité X 10^-3 (Pa.s)

CS640

CS6

CS60

50.0

0.0

0.00   0.10   0.20   0.30   0.40   0.50   0.60   0.70   0.80   0.90   1.00

CS60        1,6 g/l de CS6 à  0 % de biomasse
CS6         2   g/l de CS6 à 20 % de biomasse
CS640       2,4 g/l de CS6 à 40 % de biomasse

T  =  20°C

FIG. 4

Viscosité X 10^-3 (Pa.s) vs Gradient (s^-1)

CS640
CS60
CS6

| CS60 | 3,2 g/l de CS6 à 0 % de biomasse |
| CS6 | 4 g/l de CS6 à 20 % de biomasse |
| CS640 | 4,8 g/l de CS6 à 40 % de biomasse |

T = 20°C

EP 0 453 366 B1

FIG. 5

Viscosité X 10^-3 (Pa.s)

Gradient (s^-1)

CS6

CS640

CS60

| CS60 | 4,8 g/l de CS6 à 0 % de biomasse |
| CS6 | 6 g/l de CS6 à 20 % de biomasse |
| CS640 | 1,2 g/l de CS6 à 40 % de biomasse |

T = 20°C

FIG. 6

Viscosite X 10^-3 (Pa.s) vs Gradient (s^-1)

CS60

CS6

CS640

| CS60 | 1,6 g/l de CS6 à 0 % de biomasse | T = 50°C |
| CS6 | 2 g/l de CS6 à 20 % de biomasse | |
| CS640 | 2,4 g/l de CS6 à 40 % de biomasse | |

EP 0 453 366 B1

FIG. 7

Viscosité X 10^-3 (Pa.s) vs Gradient (s^-1)

CS640
CS60
CS6

T = 50°C

CS60   3,2 g/l de CS6 à  0 % de biomasse
CS6    4   g/l de CS6 à 20 % de biomasse
CS640  4,8 g/l de CS6 à 40 % de biomasse

FIG. 8

EP 0 453 366 B1

Viscosité X 10^-3 (Pa.s)

Gradient (s^-1)

CS640

CS60

CS6

| CS60 | 4,8 g/l de CS6 à 0 % de biomasse |
| CS6 | 6 g/l de CS6 à 20 % de biomasse |
| CS640 | 1,2 g/l de CS6 à 40 % de biomasse |

T = 50°C

FIG. 9

Viscosité X 10^-3 (Pa.s)

Gradient X 10^3 (s^-1)

CS60

CS6

CS640

T = 70°C

CS60    1,6 g/l de CS6 à 0 % de biomasse
CS6      2 g/l de CS6 à 20 % de biomasse
CS640   2,4 g/l de CS6 à 40 % de biomasse

FIG. 10

EP 0 453 366 B1

CS60      3,2 g/l de CS6 à  0 % de biomasse
CS6       4     g/l de CS6 à 20 % de biomasse
CS640     4,8 g/l de CS6 à 40 % de biomasse

T = 70°C

FIG. 11

Viscosité X 10^-3 (Pa.s)

Gradient (s^-1)

| | |
|---|---|
| CS60 | 4,8 g/l de CS6 à 0 % de biomasse |
| CS6 | 6 g/l de CS6 à 20 % de biomasse |
| CS640 | 1,2 g/l de CS6 à 40 % de biomasse |

T = 70°C

EP 0 453 366 B1